# EUROPEAN PATENT APPLICATION

(11) **EP 1 708 491 A2**
(43) Date of publication of application: **04.10.2006**
(21) Application number: 06111923.6
(22) Date of filing: 29.03.2006
(51) Int. Cl.: H04N 5/21

(54) **Image-quality adjusting apparatus, image-quality adjusting method, and display apparatus**

(30) Priority: 29.03.2005 JP 2005095909
(71) Applicant: Pioneer Corporation, Meguro-ku, Tokyo (JP)
(72) Inventor: Okumichi, Kenji Pioneer Corporation, Ohta-ku Tokyo (JP); Kawaguchi, Hirofumi Pioneer Corporation, Nakakoma-gun Yamanashi (JP)
(74) Representative: Viering, Jentschura & Partner

(57) **Abstract**

A sharpness adjusting apparatus (20) detects the level of noise included in a video signal, for each of a plurality of frequency bands, and sets and changes a sharpness intensity value in accordance with the detected noise level, for each of the plurality of frequency bands. Then, the sharpness adjusting apparatus (20) adjusts the sharpness of a video image, in accordance with the sharpness intensity value, for each of the plurality of frequency bands.

## Description

### BACKGROUND OF THE INVENTION

### 1. Field of the Invention

The present invention relates to an image-quality adjusting apparatus and an image-quality adjusting method which can be used for a display apparatus for displaying a video image or an image, as well as the display apparatus provided with the image-quality adjusting apparatus.

### 2. Description of the Related Art.

In most display apparatuses, such as a plasma display, a liquid crystal display, and a CRT (Cathode Ray Tube), for example, an image-quality adjusting apparatus is provided.

The image-quality adjusting apparatus is an apparatus for adjusting image-quality, and as the image-quality adjusting apparatus, there are a sharpness adjusting apparatus, a noise reduction apparatus, a contrast-ratio adjusting apparatus, a color-depth adjusting apparatus, a gamma value adjusting apparatus and the like.

In the image-quality adjusting apparatus, the adjustment amount of the image-quality is uniformly set, regardless of a change in the level of noise included in a video signal. Thus, there are the following problems, for example.

At first, a problem about the sharpness adjusting apparatus will be exemplified. If the intensity of sharpness (i.e., the magnitude or degree of sharpness, or the intensity of definition) is relatively strongly set, a video image becomes clear when a video signal does not include much noise, and good image-quality can be obtained- However, under the setting, if the video signal includes much noise, not only the video image but also the noise become clear, which rather deteriorates the image quality. On the other hand, if the sharpness is relatively weakly set, it is possible to make noise less noticeable when the video signal includes much noise, and it is possible to prevent the deterioration of the image quality. However, under the setting, if the video signal does not include much noise, the video image is unclear, so that it is hardly possible to obtain sufficiently good image quality.

Next, a problem about the contrast-ratio adjusting apparatus will be exemplified. If a contrast ratio is set to be relatively large, the contrast (i.e., the contrast between brightness and darkness) of a video image becomes clear when a video signal does not include much noise, and good image-quality can be obtained. However, under the setting, if the video signal includes much noise, the noise is noticeable, which rather deteriorates the image quality. On the other hand, if the contrast ratio is set to be relatively small, it is possible to make noise less noticeable when the video signal includes much noise, and it is possible to prevent the deterioration of the image quality. However, under the setting, if the video signal does not include much noise, the contrast of the video image is unclear, so that it is hardly possible to obtain sufficiently good image quality.

Next, a problem about the color-depth adjusting apparatus will be exemplified- If color depth is relatively deeply set, the color of a video image becomes bright when a video signal does not include much noise, and good image-quality can be obtained. However, under the setting, if the video signal includes much noise, the noise is noticeable, which rather deteriorates the image quality. On the other hand, if the color depth is relatively lightly or shallowly set, it is possible to make noise less noticeable when the video signal includes much noise, and it is possible to prevent the deterioration of the image quality. However, under the setting, if the video signal does not include much noise, the color of the video image lacks the brightness, so that it is hardly possible to obtain sufficiently good image quality.

Next, a problem about the gamma value (i.e., the y value) adjusting apparatus will be exemplified. If a gamma value is properly set, it is possible to realize the faithful reproduction of a video image when a video signal does not include much noise, and good image-quality can be obtained. However, under the setting, if the video signal includes much noise, the noise is noticeable in a portion colored in near black (i.e., a portion whose color is near black). On the other hand, if the gamma value is set to be large, it is possible to make noise less noticeable in the portion colored in near black when the video signal includes much noise. However, under the setting, if the video signal does not include much noise, the faithful reproduction of the video image is lacked, so that it is hardly possible to obtain; sufficiently good image quality.

Next, a problem about the noise reproduction apparatus will be exemplified. If the intensity of noise reduction (i.e., the magnitude or degree of noise reduction) is relatively weakly set, it is possible to sufficiently remove noise when a video signal does not include much noise, and the clearness of a video image can be maintained, However, under the setting, if the video signal includes much noise, it is hardly possible to sufficiently remove the noise, which deteriorates the image quality. On the other hand, if the intensity of the noise reduction is relatively strongly set, it is possible to sufficiently remove noise when the video signal includes much noise, and it is possible to prevent the deterioration of the image quality. However, under the setting, if the video signal does not include much noise, the video image is not focused (unclear) because the noise reduction is strong, so that it is hardly possible to obtain sufficiently good image quality.

Next, a problem about a filter for extracting a synchronization signal included in a video signal, which is provided for a video signal synchronizing apparatus, such as a PLL (Phase Locked Loop) for synchronizing a video signal, will be exemplified. If filter intensity is relatively weakly set, it is possible to perform synchronization, highly accurately, when a video signal does not include much noise, and good image-quality can be obtained. However, under the setting, if the video signal includes much noise, it is difficult to perform the synchronization, which deteriorates the image quality in some cases. On the other hand, if the filter intensity is relatively strongly set, it is possible to perform the synchronization when the video signal includes much noise, and it is possible to prevent the deterioration of the image quality. However, under the setting, if the video signal does not include much noise, the accuracy of the synchronization is low, so that it is hardly possible to obtain sufficiently good image quality.

### SUMMARY OF THE INVENTION

It is therefore an object of the present invention to provide an image-quality adjusting apparatus, an image-quality adjusting method, and a display apparatus, in which good image quality can be obtained even if the level of noise included in a video signal is changed.

The above object of the present invention can be achieved by an image-quality adjusting apparatus for adjusting image quality of a video image corresponding to a video signal by performing signal processing for the video signal, the image-quality adjusting apparatus provided with a noise-level detecting device for detecting a level of noise included in the video signal; an adjustment-value changing device for changing an image-quality adjustment value, in accordance with the noise level detected by the noise-level detecting device; and an image-quality adjusting device for adjusting the image quality of the video image, in accordance with the image-quality adjustment value changed by the adjustment-value changing device.

According to the image-quality adjusting apparatus, it is possible to perform the image-quality adjustment adapted for the change of the noise level, by operating the image-quality adjustment device, in accordance with the level change of the noise included in the video signal. By this, even if the level of the noise included in the video signal is changed, it is possible to always or almost always obtain good image quality.

The above object of the present invention can be also achieved by an image-quality adjusting method of adjusting image quality of a video image corresponding to a video signal by performing signal processing for the video signal, the image-quality adjusting method provided with a noise-level detecting process of detecting a level of noise included in the video signal an adjustment-value changing process of changing an image-quality adjustment value, in accordance with the noise level detected in the noise-level detecting process; and an image-quality adjusting process of adjusting the image quality of the video image, in accordance with the image-quality adjustment value changed in the adjustment-value changing process.

According to the image-quality adjusting method, it is possible to perform the image-quality adjustment adapted for the change of the noise level, by operating the image-quality adjustment process, in accordance with the level change of the noise included in the video signal. By this, even if the level of the noise included in the video signal is changed, it is possible to always or almost always obtain good image quality.

The above object of the present invention can be also achieved by a display apparatus provided with the above-mentioned image-quality adjusting apparatus (including its various aspects).

The above object of the present invention can be also achieved by a computer program of instructions for tangibly embodying a program of instructions executable by a computer, to make the computer function as the above-mentioned image-quality adjusting apparatus (including its various aspects).

According to the computer program of the present invention, the above-mentioned image-quality adjusting apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

The nature, utility, and further features of this invention will be more clearly apparent from the following detailed description with reference to preferred embodiment of the invention when read in conjunction with the accompanying drawings briefly described below.

### BRIEF DESCRIPTION OF THE DRAWINGS

FIG. 1 is a front view showing an embodiment of the display apparatus of the present invention;
FIG. 2 is a block diagram showing an embodiment of the image-quality adjusting apparatus of the present invention;
FIG. 3 is a block diagram showing a noise-level detection circuit in FIG. 2;
FIG. 4 is a waveform chart showing a video signal;
FIG. 5 is a graph showing a relationship between the level of a control signal and a noise level;
FIG. 6 is a block diagram showing a sharpness adjusting apparatus which is a first example of the image-quality adjusting apparatus of the present invention;
FIG. 7 is a block diagram showing a contrast-ratio adjusting apparatus which is a second example of the image-quality adjusting apparatus of the present invention;
FIG. 8 is a block diagram showing a color-depth adjusting apparatus which is a third example of the image-quality adjusting apparatus of the present invention;
FIG. 9 is a block diagram showing a gamma value adjusting apparatus which is a fourth example of the image-quality adjusting apparatus of the present invention;
FIG. 10 is a block diagram showing a noise reduction apparatus which is a fifth example of the image-quality adjusting apparatus of the present invention; and
FIG. 11 is a block diagram showing a synchronizing apparatus which is a sixth example of the image-quality adjusting apparatus of the present invention.

### DETAILED DESCRIPTION OF THE PREFERRED EMBODIMENTS

Hereinafter, the embodiments of the present invention will be discussed with reference to the drawings.

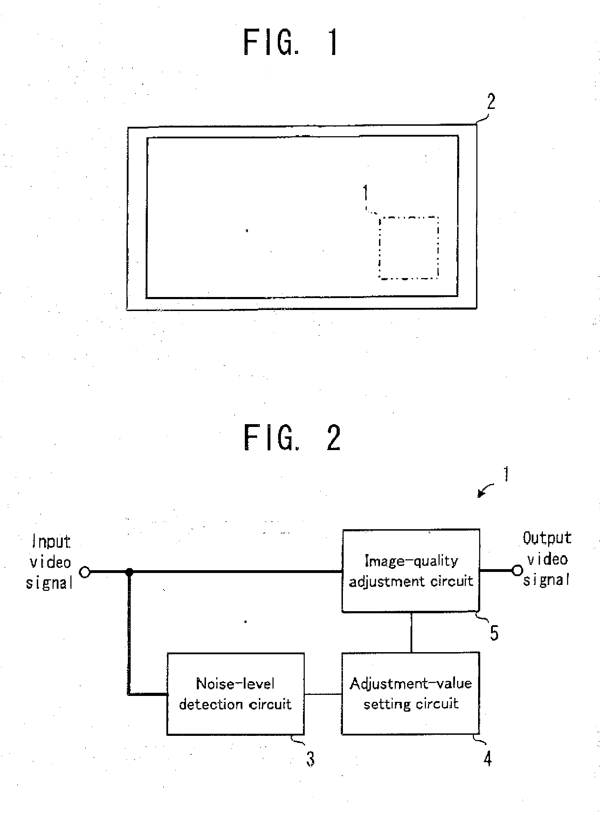

FIG. 1 shows a display apparatus provided with an image-quality adjusting apparatus which is an embodiment of the present invention. An image-quality adjusting apparatus in the embodiment of the present invention is preferably used for a display apparatus 2 as shown in FIG. 1, for example. The display apparatus 2 is a plasma display, a liquid crystal display, a CRT display, or the like, for example. According to the display apparatus 2 provided with the image-quality adjusting apparatus 1, it is possible to always or almost always obtain good image quality, even if the level of noise included in a video signal is changed.

FIG. 2 shows the structure of the image-quality adjusting apparatus 1. The image-quality adjusting apparatus 1 is an apparatus for adjusting the image quality of a video image according to a video signal, by performing signal processing for the video signal. The image-quality adjusting apparatus 1 is, for example, a sharpness adjusting apparatus, a contrast-ratio adjusting apparatus, a color-depth adjusting apparatus, a gamma value adjusting apparatus, a noise reduction apparatus, or a synchronizing apparatus (a filter intensity adjusting apparatus) or the like. The video signal may be an analog video signal or a digital video signal.

The quality adjusting apparatus 1 is provided with: a noise-level detection circuit 3; an adjustment-value setting circuit 4; and an image-quality adjustment circuit 5.

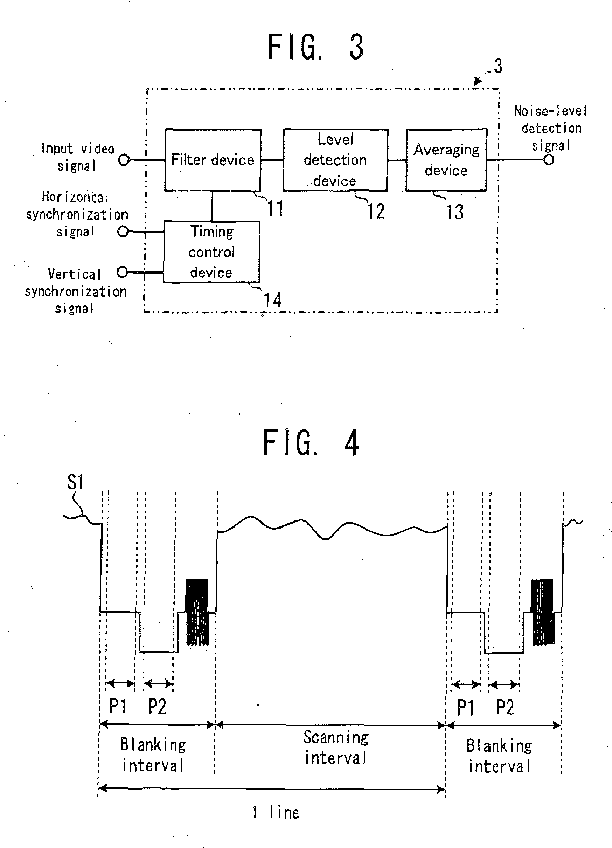

**FIG. 3** shows the structure of the noise-level detection circuit 3. The noise-level detection circuit 3 detects the level of noise included in the video signal (e.g., a composite video signal, a composite signal). Specifically, the noise-level detection circuit 3 detects the level of noise included in a vertical blanking interval and a horizontal blanking interval of the vide signal. In the vertical blanking interval and the horizontal blanking interval of the vide signal, there is a pulse signal with a large pulse width, such as a vertical synchronization, pulse signal and a horizontal synchronization pulse signal, for example. In the pulse signal, a portion in which a constant voltage level is maintained can be regarded as a direct current (DC) signal. The noise-level detection circuit 3 extracts noise on the portion which can be regarded as the DC signal by using a high pass filter or the like, for example, to thereby detect the level of the noise. As described above, it is possible to detect the level of noise included over the entire video signal, easily and highly accurately; by detecting the level of noise included in the vertical blanking interval and the horizontal blanking interval of the vide signal.

The noise-level detection circuit 3 is provided with: a filter device 11; a level detection device 12; an averaging device 13; and a timing control device 14, as shown in FIG. 3.

The filter device 11 extracts noise included in a predetermined extraction section in the vertical blanking interval and the horizontal blanking interval of the vide signal. For example, as shown in FIG. 4, the filter device 11 extracts noise on an extraction section which can be regarded as a DC signal in the horizontal blanking interval of a video signal S1, specifically, noise on an extraction section P1 as being one portion of front porch and on an extraction section P2 as being one portion of a horizontal synchronization signal. As described above, according to the filter device 11, it is possible to detect noise, easily and highly accurately, by extracting the noise included in the section which can be regard as the DC signal in the blanking interval of the video signal. The filter device 11 can be constructed from a high pass filter or the like, for example.

The level detection device 12 detects the level of the noise extracted by the filter device 11. Incidentally, if the noise is an analog signal, the detection may be performed by peak holding or the like, for example. However, if the noise is a digital signal, it is only necessary to merely read a digital value.

The averaging device 13 accumulates the noise level detected by the level detection device 12 for one frame or for one field, and divides the accumulated value of the noise level obtained by the accumulation, by the number of extraction sections which exist in the video signal which constitutes one frame or one field. For example, if the number of scanning lines is 525 and interlace is performed, there are 262 horizontal blanking intervals and one vertical blanking interval in the video signal which constitutes one field. The averaging device 13 adds all the level of the noise on the extraction sections P1 and P2 in the 262 horizontal blanking intervals and the level of the noise on a predetermined extraction section (i.e., a section which can be regarded as the DC signal) in the one vertical blanking interval, to thereby obtain a noise-level added value "A". Then, the averaging device 13 adds the of extraction sections which exist in the 262 horizontal blanking intervals (e.g. 524) and the number of extraction sections which exist in the one vertical blanking interval, to thereby obtain the number of extraction sections "N". Then, the averaging device 13 divides the noise-level added value "A" by the number of extraction sections "N". As a result, it is possible to obtain a substantial average value of the noise level included in the entire video signal which constitutes one field. As described above, according to the averaging device 13, it is possible to obtain the substantial average value of the noise level included in the entire video signal, easily and highly accurately, by accumulating the noise level included in the plurality of extraction sections and by dividing the accumulated value obtained by the accumulation by the number of the extraction sections.

The timing control device 14 controls the timing that the filter device 11 performs the noise extracting process, on the basis of a vertical synchronization signal and a horizontal synchronization signal. Incidentally, the vertical synchronization signal and the horizontal synchronization signal can be prepared by dividing a vertical synchronization pulse and a horizontal synchronization pulse from the video signal.

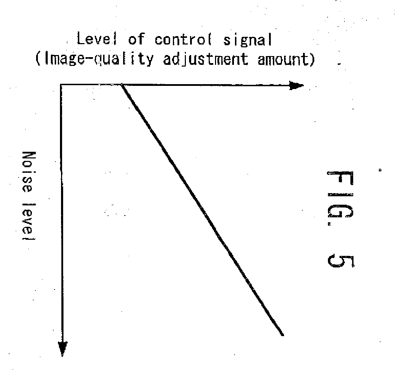

The adjustment-value setting circuit 4 sets and changes an image-quality adjustment value, in accordance with the noise level detected by the noise-level detection circuit 3 (specifically, the substantial average value of the noise level included in the entire video signal which constitutes one frame), as shown in FIG. 2. For example, the adjustment-value setting circuit 4 generates a control signal having a level corresponding to the image-quality adjustment value which responds to the noise level, as shown in FIG. 5. In this case, the adjustment-value setting circuit 4 is preferably provided with a circuit for making the proper way, degree, or range of a change in the level of the control signal which responds to a change in the noise level, in order to control the image-quality adjustment circuit 5. For example, the adjustment-value setting circuit 4 is preferably provided with a circuit for setting a time constant which is appropriate to ease an abrupt change in the noise level, or an amplifier circuit for properly setting the degree of the level of the control signal.

The image quauty adjustment circuit 5 adjusts the image quality of a video image, in accordance with the image-quality adjustment value set and changed by the adjustment-value setting circuit 4. For example, the image-quality adjustment circuit 5 is, for example, a sharpness adjusting apparatus, a contrast-ratio adjusting apparatus, a color-depth adjusting apparatus, a gamma value adjusting apparatus, a noise reduction apparatus, or a filter intensity adjusting apparatus provided for a synchronizing apparatus, or the like.

The operation of the image-quality adjusting apparatus 1 is as follows. If a video signal (e.g., a composite video signal, a composite signal) is inputted to the image-quality adjusting apparatus 1, the video signal is inputted to both the noise-level detection circuit 3 and the image-quality adjustment circuit 5, in the image-quality adjusting apparatus 1. Moreover, in the noise-level detection circuit 3, the video signal is inputted to the filter device 11. The filter device 11 extracts the noise included in the extraction section or sections in the vertical blanking interval and the horizontal blanking interval of the video signal, on the basis of the timing control performed by the timing control device 14. Then, the level detection device 12 detects the level of the extracted noise. Then, the averaging device 13 generates the substantial average value of the noise level included in the entire video signal which constitutes one frame or one field, on the basis of the noise level detected by the level detection device 12. Then, the adjustment-value setting circuit 4 generates the control signal having the level corresponding to the image-quality adjustment value which responds to the substantial average value of the noise level included in the entire video signal which constitutes one frame or one field. Then, the image-quality adjustment circuit 5 adjusts the image quality of the video image corresponding to the video signal, on the basis of the control signal- As described above, if the level of the noise included in the video signal is changed, the image quality adjustment of the video image is performed, in accordance with the change. The specific content of the image-quality adjustment varies depending on the type of the image-quality adjustment circuit 5 (a sharpness adjustment circuit, a contrast ratio adjustment circuit, a noise reduction circuit, etc.); however, generally speaking, if the noise included in the video signal increases, the image-quality adjustment is performed to reduce an influence on the image quality of the noise in response to the increase of the noise. On the other hand, if the noise included in the video signal decreases, the image-quality adjustment is performed to make better image quality in response to the decrease of the noise. Incidentally, the specific content of the image-quality adjustment will be discussed later.

As explained above, according to the image-quality adjusting apparatus 1; it is possible to perform the image-quality adjustment adapted for the change of the noise level, by operating the image-quality adjustment circuit 5, in accordance with the level change of the noise included in the video signal. By this, even if the level of the noise included in the video signal is changed, it is possible to always or almost always obtain good image quality.

Incidentally, in the image-quality adjusting apparatus 1, the noise-level detection circuit 3 is a specific example of the noise-level detecting device and the noise-level detecting process. The image-quality adjustment circuit 5 is a specific example of the image-quality adjusting device and the image-quality adjusting process. The Biter device 11 and the timing control device 14 are a specific example of the extracting device. The level detection device 12 is a specific example of the level detecting device. The averaging device 13 is a specific example of the average-value generating device.

### (First Example)

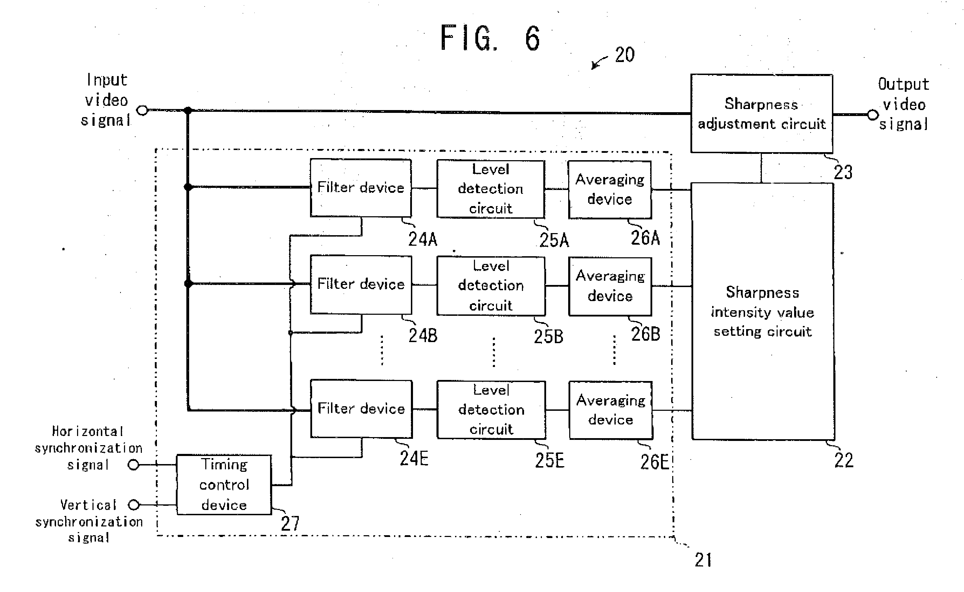

Hereinafter, the first example of the present invention will be discussed. The first example below is an example in which the image-quality adjusting apparatus of the present invention is applied to the sharpness adjusting apparatus. FIG. 6 shows the sharpness adjusting apparatus in the first example of the present invention.

A sharpness adjusting apparatus 20 in FIG. 6 is an apparatus for adjusting the sharpness of a video image. The sharpness adjusting apparatus 20 detects the level of noise included in a video signal for each of a plurality of frequency bands, and sets and changes a sharpness intensity value in accordance with the detected noise level, for each of the plurality of frequency bands. Then, the sharpness adjusting apparatus 20 adjusts the sharpness of the video image in accordance with the sharpness intensity value, for each of the plurality of frequency bands. The sharpness adjusting apparatus 20 is provided with: a noise-level detection circuit 21: a sharpness intensity value setting circuit 22; and a sharpness adjustment circuit 23.

The noise-level detection circuit 21 detects the level of noise included in the vertical blanking interval and the horizontal blanking interval of the video signal, for each of the plurality of frequency bands, such as five frequency bands. The noise-level detection circuit 21 is provided with: five filter devices 24A to 24E; five level detection devices 25A to 25E; five averaging devices 26A to 26E; and a timing control device 27. Each of the filter devices 24A to 24E extracts the noise included in the predetermined extraction section (refer to FIG. 4) in the vertical blanking interval and the horizontal blanking interval of the video signal, for the respective one of the five frequency bands. For example, each of the filter devices 24A to 24E can be constructed from a band pass filter or the like. Each of the level detection devices 25A to 25E detects the level of the noise extracted by the filter devices 24A to 24E respectively, for the respective one of the five frequency bands. Each of the averaging devices 26A to 26E accumulates the noise level detected by the level detection devices 25A to 25E respectively for one frame or one field, and divides the accumulated value of the noise level obtained by the accumulation, by the number of extraction sections which exist in the video signal which constitutes one frame or one field. Each of the averaging devices 26A to 26E performs the accumulating process and the dividing process, for the respective one of the five frequency bands. As a result, it is possible to obtain the substantial average value of the noise level included in the entire video signal which constitutes one frame or one field, for each of the five frequency bands. The timing control device 27 controls the timing that the filter devices 24A to 24E perform the noise extracting process, on the basis of the vertical synchronization signal and the horizontal synchronization signal.

The sharpness intensity value setting circuit 22 sets and changes the sharpness intensity value, for each of the plurality of frequency bands, in accordance with the noise level detected by the noise-level detection circuit 21 for each of the plurality of frequency bands (i.e. the substantial average value of the noise level included in the entire video signal which constitutes one frame or one field). For example, the sharpness intensity value setting circuit 22 generates a control signal having a level corresponding to the sharpness intensity value which responds to the noise level, for each of the five frequency bands.

The sharpness adjustment circuit 23 adjusts the sharpness of the video image, in accordance with the sharpness intensity value set and changed by the sharpness intensity value setting circuit 22 (e.g. the control signal having the level corresponding to the sharpness intensity value), for each of the plurality of frequency bands (e.g. five frequency bands).

The operation of the sharpness adjusting apparatus 20 is as follows. If a video signal is inputted to the sharpness adjusting apparatus 20, the video signal is inputted to both the noise-level detection circuit 21 and the sharpness adjustment circuit 23, in the sharpness adjusting apparatus 20. The noise-level detection circuit 21 generates the substantial average value of the noise level included in the entire video signal which constitutes one frame or one field, for each of the plurality of frequency bands. Then, the sharpness intensity value setting circuit 22 generates the control signal having the level corresponding to the sharpness intensity value which responds to the substantial average value of the noise level included in the entire video signal which constitutes one frame or one field, for each of the plurality of frequency bands. Then, the sharpness adjustment circuit 23 adjusts the sharpness of the video image corresponding to the video signal, on the basis of the control signal, for each of the plurality of frequency bands. As described above, if the level of the noise included in the video signal is changed, the sharpness adjustment of the video image is performed in accordance with the change. Specifically, if the noise included in the video signal increases, the sharpness adjusting apparatus 20 reduces the sharpness in response to the increase of the noise. By this, it is possible to prevent the noise from being clear, to thereby prevent the deterioration of image quality. On the other hand, if the noise included in the video signal decreases, the sharpness adjusting apparatus 20 increases the sharpness in response to the decrease of the noise. By this, it is possible to make clear image quality.

As explained above, according to the sharpness adjusting apparatus 20, it is possible to perform the sharpness adjustment adapted for the change of the noise level, by operating the sharpness adjustment circuit 23 in accordance with the change of the noise level. By this, even if the level of the noise included in the video signal is changed, it is possible to always or almost always obtain good image quality.

Moreover, according to the sharpness adjusting apparatus 20, it is possible to efficiently make noise less noticeable while the clearness of the video image is maintained, by setting and changing the sharpness intensity value and adjusting the sharpness, for each of the plurality of frequency bands. For example, if noise with a higher frequency increases in the video signal, it is possible to reduce the sharpness only for a higher frequency band in which the noise exists. By this, it is possible to make the noise less noticeable in the higher frequency band, while the clearness of the video image is maintained in a lower frequency band. In general, human's eyes are sensitive to the clearness of a video image in a relatively low video frequency band. Therefore, if the clearness of the video image in a relatively low video frequency band is maintained, even if the sharpness is reduced in a higher video frequency band, the entire clearness of the video image is not lost very much. Thus, according to such a process, it is possible to efficiently make noise less noticeable while the clearness of the video image is maintained, to thereby make good image quality.

Incidentally, the sharpness intensity value setting circuit 22 is a specific example of the sharpness changing device, the sharpness adjustment circuit 23 is a specific example of the sharpness adjusting device, and the filter device 24A to 24E are a specific example of the noise extracting device.

### (Second Example)

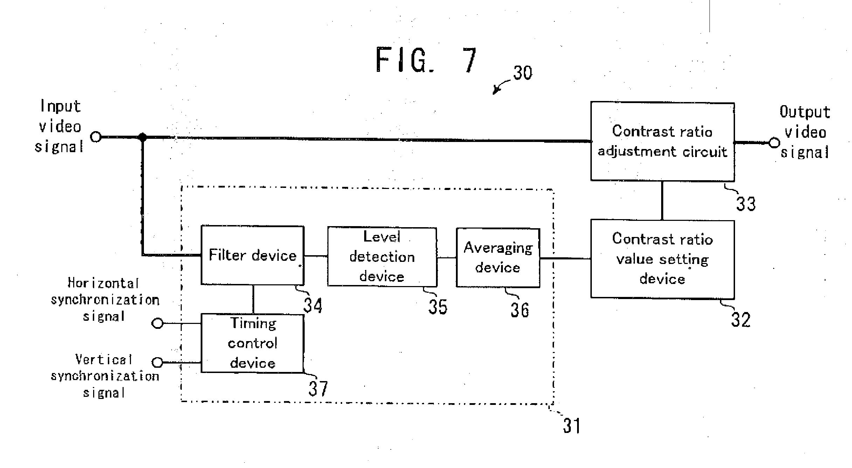

Hereinafter, the second example of the present invention will be discussed. The second example below is an example in which the image-quality adjusting apparatus of the present invention is applied to the contrast-ratio adjusting apparatus- FIG. 7 shows the contrast-ratio adjusting apparatus in the second example of the present invention.

A contrast-ratio adjusting apparatus 30 in FIG. 7 is an apparatus for adjusting the contrast ratio of a video image. The contrast-ratio adjusting apparatus 30 is provided with: a noise-level detection circuit 31; a contrast-ratio-value setting circuit 32; and a contrast-ratio adjustment circuit 33.

The noise-level detection circuit 31 detects the level of noise included in the vertical blanking interval and the horizontal blanking interval of the video signal. The noise-level detection circuit 31 is provided with: a filter device 34; a level detection device 35; an averaging device 36; and a timing control device 37. The filter device 34 extracts the noise included in the predetermined extraction section (refer to FIG. 4) in the vertical blanking interval and the horizontal blanking interval of the video signal. For example, the filter device 34 can be constructed from a band pass filter or the like. The level detection device 35 detects the level of the noise extracted by the filter device 34. The averaging device 36 accumulates the noise level detected by the level detection device 35 for one frame or one field, and divides the accumulated value of the noise level obtained by the accumulation, by the number of extraction sections which exist in the video signal which constitutes one frame or one field. As a result, it is possible to obtain the substantial average value of the noise level included in the entire video signal which constitutes one frame or one field. The timing control device 37 controls the timing that the filter device 34 performs the noise extracting process, on the basis of the vertical synchronization signal and the horizontal synchronization signal.

The contrast-ratio-value setting circuit 32 sets and changes a contrast ratio value, in accordance with the noise level detected by the noise-level detection circuit 31 (i-e. the substantial average value of the noise level included in the entire video signal which constitutes one frame or one field). For example, the contrast-ratio-value setting circuit 32 generates a control signal having a level corresponding to the contrast ratio value which responds to the noise level.

The contrast-ratio adjustment circuit 33 adjusts the contrast ratio of the video image, in accordance with the contrast ratio value set and changed by the contrast-ratio-value setting circuit 32 (e.g. the control signal having the level corresponding to the contrast ratio value).

The operation of the contrast-ratio adjusting apparatus 30 is as follows. If a video signal is inputted to the contrast-ratio adjusting apparatus 30, the video signal is inputted to both the noise-level detection circuit 31 and the contrast-ratio adjustment circuit 33, in the contrast-ratio adjusting apparatus 30. The noise-level detection circuit 31 generates the substantial average value of the noise level included in the entire video signal which constitutes one frame or one field. Then, the contrast-ratio-value setting circuit 32 generates the control signal having the level corresponding to the contrast ratio value which responds to the substantial average value of the noise level included in the entire video signal which constitutes one frame or one field. Then, the contrast-ratio adjustment circuit 33 adjusts the contrast ratio of the video image corresponding to the video signal, on the basis of the control signal. As described above, if the level of the noise included in the video signal is changed, the contrast ratio adjustment of the video image is performed in accordance with the change. Specifically, if the noise included in the video signal increases, the contrast-ratio adjusting apparatus 30 reduces the contrast ratio in response to the increase of the noise. By this, it is possible to make noise less noticeable, to thereby prevent the deterioration of image quality. On the other hand, if the noise included in the video signal decreases, the contrast-ratio adjusting apparatus 30 increases the contrast ratio in response to the decrease of the noise. By this, it is possible to make image quality with a clear contrast (light and darkness).

As explained above, according to the contrast-ratio adjusting apparatus 30, it is possible to perform the contrast ratio adjustment adapted for the change of the noise level, by operating the contrast-ratio adjustment circuit 33 in accordance with the change of the level noise- By this, even if the level of the noise included in the video signal is changed, it is possible to always or almost always obtain good image quality.

Incidentally, the contrast-ratio-value setting circuit 32 is a specific example of the contrast-ratio changing device, and the contrast-ratio adjustment circuit 33 is a specific example of the contrast-ratio adjusting device.

### (Third Example)

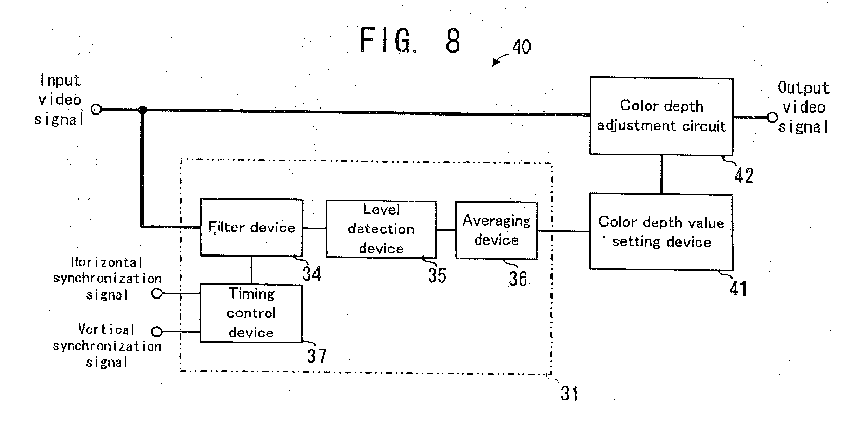

Hereinafter, the third example of the present invention will be discussed. The third example below is an example in which the image-quality adjusting apparatus of the present invention is applied to the color-depth adjusting apparatus. FIG. 8 shows the color-depth adjusting apparatus in the third example of the present invention. Incidentally, in a color-depth adjusting apparatus 40 in FIG. 8, the same constitutional elements as those of the contrast-ratio adjusting apparatus 30 shown in FIG. 7 carry the same numerical references, and the explanation thereof is omitted.

The color-depth adjusting apparatus 40 in FIG. 8 is an apparatus for adjusting the color depth of a video image. The color-depth adjusting apparatus 40 is provided with: the noise-level detection circuit 31; a color depth-value setting circuit 41. and a color-depth adjustment circuit 42.

The color-depth-value setting circuit 41 sets and changes a color depth value, in accordance with the noise level detected by the noise-level detection circuit 31 (i.e. the substantial average value of the noise level included in the entire video signal which constitutes one frame or one field). For example, the color depth-value setting circuit 41 generates a control signal having a level corresponding to the color depth value which responds to the noise level.

The color-depth adjustment circuit 42 adjusts the color depth of the video image, in accordance with the color depth value set and changed by the color- depth -value setting circuit 41 (e.g. the control signal having the level corresponding to the color depth value).

The operation of the color-depth adjusting apparatus 40 is as follows. If a video signal is inputted to the color-depth adjusting apparatus 40, the video signal is inputted to both the noise-level detection circuit 31 and the color-depth adjustment circuit 42, in the color-depth adjusting apparatus 40. The noise-level detection circuit 31 generates the substantial average value of the noise level included in the entire video signal which constitutes one frame or one field. Then, the color-depth-value setting circuit 41 generates the control signal having the level corresponding to the color depth value which responds to the substantial average value of the noise level included in the entire video signal which constitutes one frame or one field. Then, the color-depth adjustment circuit 42 adjusts the color depth of the video image corresponding to the video signal, on the basis of the control signal. As described above, if the level of the noise included in the video signal is changed, the color depth adjustment of the video image is performed in accordance with the change. Specifically, if the noise included in the video signal increases, the color-depth adjusting apparatus 40 lightens the color depth in response to the increase of the noise. By this, it is possible to make noise less noticeable, to thereby prevent the deterioration of image quality. On the other hand, if the noise included in the video signal decreases, the color-depth adjusting apparatus 40 darkens the color depth in response to the decrease of the noise. By this, it is possible to make image quality with a bright color.

As explained above, according to the color-depth adjusting apparatus 40, it is possible to perform the color depth adjustment adapted for the change of the noise level, by operating the color-depth adjustment circuit 42 in accordance with the change of the noise level. By this, even if the level of the noise included in the video signal is changed, it is possible to always or almost always obtain good image quality.

Incidentally, the color-depth-value setting circuit 41 is a specific example of the color-depth changing device, and the color-depth adjustment circuit 42 is a specific example of the color-depth adjusting device.

### (Fourth Example)

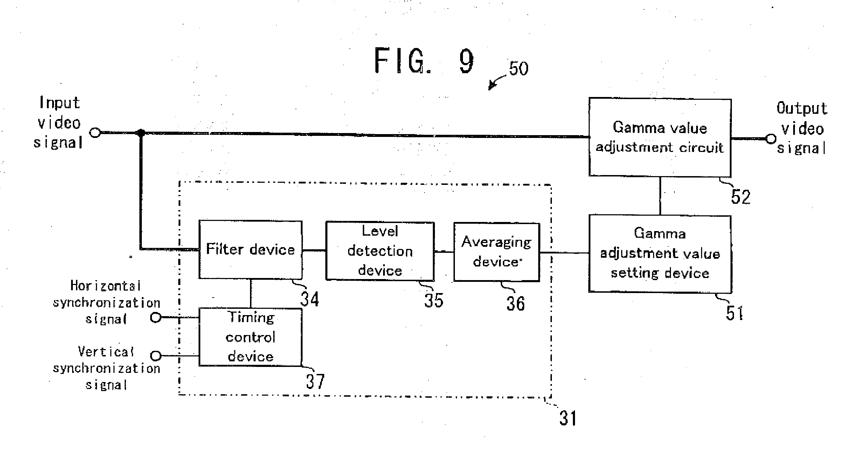

Hereinafter, the fourth example of the present invention will be discussed. The fourth example below is an example in which the image-quality adjusting apparatus of the present invention is applied to the gamma-value adjusting apparatus. FIG. 9 shows the gamma-value adjusting apparatus in the fourth example of the present invention. Incidentally, in a gamma-value adjusting apparatus 50 in FIG. 9, the same constitutional elements as those of the contrast-ratio adjusting apparatus 30 shown in FIG. 7 carry the same numerical references, and the explanation thereof is omitted.

The gamma-value adjusting apparatus 50 in FIG. 9 is an apparatus for adjusting the gamma-value of a video image. The gamma-value adjusting apparatus 50 is provided with: the noise-level detection circuit 31; a gamma adjustment value setting circuit 51; and a gamma-value adjustment circuit 52.

The gamma-adjustment-value setting circuit 51 sets and changes a gamma adjustment value, in accordance with the noise level detected by the noise-level detection circuit 31 (i.e. the substantial average value of the noise level included in the entire video signal which constitutes one frame or one field). For example, the gamma-adjustment-value setting circuit 51 generates a control signal having a level corresponding to the gamma adjustment value which responds to the noise level.

The gamma-value adjustment circuit 52 adjusts the gamma value of the video image, in accordance with the gamma adjustment value set and changed by the gamma-adjustment-value setting circuit 51 (e.g. the control signal having the level corresponding to the gamma adjustment value).

The operation of the gamma-value adjusting apparatus 50 is as follows. If a video signal is inputted to the gamma-value adjusting apparatus 50, the video signal is inputted to both noise-level detection circuit 31 and the gamma-value adjustment circuit 52, in the gamma-value adjusting apparatus 50. The noise-level detection circuit 31 generates the substantial average value of the noise level included in the entire video signal which constitutes one frame or one field. Then, the gamma-adjustment-value setting circuit 51 generates the control signal having the level corresponding to the gamma adjustment value which responds to the substantial average value of the noise level included in the entire video signal which constitutes one frame or one field. Then, the gamma-value adjustment circuit 52 adjusts the gamma value of the video image which is displayed on the basis of the video signal, on the basis of the control signal. As described above, if the level of the noise included in the video signal is changed, the gamma value adjustment of the video image is performed in accordance with the change. Specifically, if the noise included in the video signal increases, the gamma-value adjusting apparatus 50 increases the gamma value in response to the increase of the noise. By this, it is possible to make noise in a portion colored in near black less noticeable, to thereby prevent the deterioration of image quality. On the other hand, if the noise included in the video signal decreases, the gamma-value adjusting apparatus 50 reduces the gamma value in response to the decrease of the noise, to thereby set it to a proper value. By this, it is possible to realize the faithful reproduction of a video image.

As explained above, according to the gamma-value adjusting apparatus 50, it is possible to perform the gamma value adjustment adapted for the change of the noise level, by operating the gamma-value adjustment circuit 52 in accordance with the change of the noise level. By this, even if the level of the noise included in the video signal is changed, it is possible to always or almost always obtain good image quality.

Incidentally, the gamma-adjustment-value setting circuit 51 is a specific example of the gamma-value changing device, and the gamma-value adjustment circuit 52 is a specific example of the gamma-value adjusting device.

### (Fifth Example)

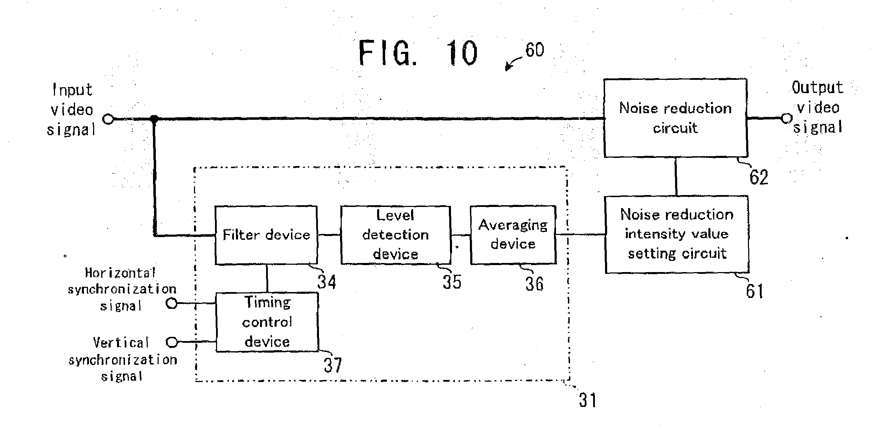

Hereinafter, the fifth example of the present invention will be discussed. The fifth example below is an example in which the image-quality adjusting apparatus of the present invention is applied to the noise reduction apparatus. FIG. 10 shows the noise reduction apparatus in the fifth example of the present invention. Incidentally, in a noise reduction apparatus 60 in FIG. 10, the same constitutional elements as those of the contrast-ratio adjusting apparatus 30 shown in FIG. 7 carry the same numerical references, and the explanation thereof is omitted.

The noise reduction apparatus 60 in FIG. 10 is an apparatus for performing a noise reducing process for a video image. The noise reduction apparatus 60 is provided with: the noise-level detection circuit 81; a noise-reduction intensity-value setting circuit 61; and a noise reduction circuit 62.

The noise-reduction intensity-value setting circuit 61 sets and changes a noise reduction intensity value, in accordance with the noise level detected by the noise-level detection circuit 31 (i.e. the substantial average value of the noise level included in the entire video signal which constitutes one frame or one field). For example, the noise-reduction intensity-value setting circuit 61 generates a control signal having a level corresponding to the noise reduction intensity value which responds to the noise level.

The noise reduction circuit 62 performs the noise reducing process for the video image, in accordance with the noise reduction intensity value set and changed by the noise-reduction intensity-value setting circuit 61 (e.g. the control signal having the level corresponding to the noise reduction intensity value).

The operation of the noise reduction apparatus 60 is as follows. If a video signal is inputted to the noise reduction apparatus 60, the video signal is inputted to both noise-level detection circuit 31 and the noise reduction circuit 62, in the noise reduction apparatus 60. The noise-level detection circuit 31 generates the substantial average value of the noise level included in the entire video signal which constitutes one frame or one field. Then, the noise-reduction intensity-value setting circuit 61 generates the control signal having the level corresponding to the noise reduction intensity value which responds to the substantial average value of the noise level included in the entire video signal which constitutes one frame or one field. Then, the noise reduction circuit 62 performs the noise reducing process for the video signal or the video image, on the basis of the control signal. As described above, if the level of the noise included in the video signal is changed, the noise reduction intensity is changed in the noise reducing process, in accordance with the change. Specifically, if the noise included in the video signal increases, the noise reduction apparatus 60 increases the noise reduction intensity in response to the increase of the noise. By this, it is possible to sufficiently remove noise, to thereby prevent the deterioration of image quality. On the other hand, if the noise included in the video signal decreases, the noise reduction apparatus 60 reduces the noise reduction intensity in response to the decrease of the noise. By this, it is possible to prevent the video image from being unfocused (unclear) by the noise reducing process, while the noise is sufficiently removed.

As explained above, according to the noise reduction apparatus 60, it is possible to perform the noise reducing process adapted for the change of the noise level, by changing the noise reduction intensity in accordance with the level change of the noise included in the video signal. By this, even if the level of the noise included in the video signal is changed, it is possible to always or almost always obtain good image quality.

Incidentally, the noise-reduction intensity-value setting circuit 61 is a specific example of the noise-reduction changing device, and the noise reduction circuit 62 is a specific example of the noise-reduction processing device.

### (Sixth Example)

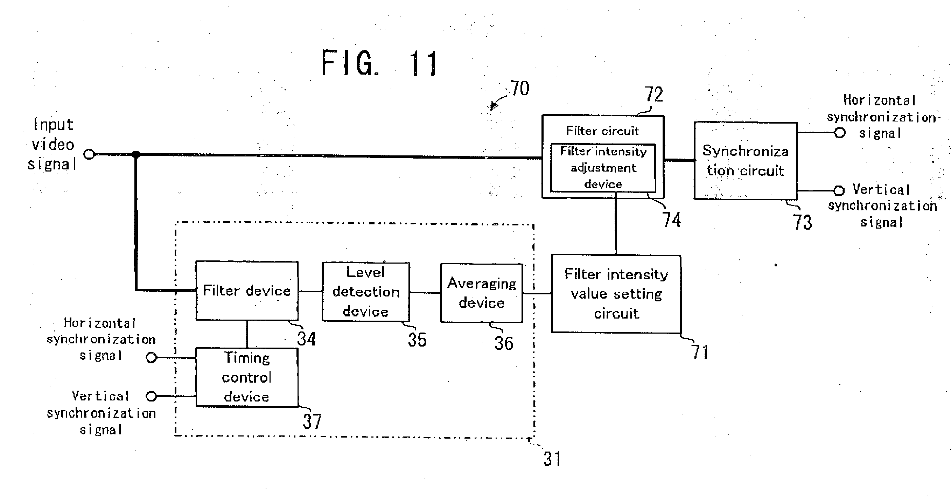

Hereinafter, the sixth example of the present invention will be discussed. The sixth example below is an example in which the image-quality adjusting apparatus of the present invention is applied to the synchronizing apparatus- FIG. 11 shows the synchronizing apparatus in the sixth example of the present invention. Incidentally, in a synchronizing apparatus 70 in FIG. 11, the same constitutional elements as those of the contrast-ratio adjusting apparatus 30 shown in FIG. 7 carry the same numerical references, and the explanation thereof is omitted.

The synchronizing apparatus 70 in FIG. 11 is an apparatus for generating a synchronization signal by separating or extracting a synchronization pulse signal included in a video signal (e.g., a composite video signal, a composite signal). Specifically, the synchronizing apparatus 70 is an apparatus for generating a vertical synchronization signal and a horizontal synchronization signal, by separating a vertical synchronization pulse signal and a horizontal synchronization pulse signal included in the video signal. The synchronizing apparatus 70 is provided with: the noise-level detection circuit 31; a filter-intensity-value setting circuit 71; a filter circuit 72; and a synchronization circuit 73. Moreover, the filter circuit 72 is further provided with a filter-intensity adjustment device 74.

The filter-intensity-value setting circuit 71 sets and changes a filter intensity value, in accordance with the noise level detected by the noise-level detection circuit 31 (i.e. the substantial average value of the noise level included in the entire video signal which constitutes one frame or one field). For example, the filter-intensity-value setting circuit 71 generates a control signal having a level corresponding to the filter intensity value which responds to the noise level.

The filter circuit 72 removes noise which may prevent the separating or extracting process of the vertical synchronization pulse signal and the horizontal synchronization pulse signal performed by the synchronization circuit 73 (e.g. noise in the pulse shape that an amplitude is large), from the video signal.

The synchronization circuit 73 generates the vertical synchronization signal and the horizontal synchronization signal, by separating or extracting the vertical synchronization pulse signal and the horizontal synchronization pulse signal from the video signal in which the noise is removed by the filter circuit 72.

The operation of the synchronizing apparatus 70 is as follows. If a video signal is inputted to the synchronizing apparatus 70, the video signal is inputted to both noise-level detection circuit 31 and the filter circuit 72, in the synchronizing apparatus 70. The noise-level detection circuit 31 generates the substantial average value of the noise level included in the entire video signal which constitutes one frame or one field. Then, the filter-intensity-value setting circuit 71 generates the control signal having the level corresponding to the filter intensity value which responds to the substantial average value of the noise level included in the entire video signal which constitutes one frame or one field. Then, the filter-intensity adjustment device 74 adjusts the filter intensity, on the basis of the control signal. The filter circuit 72 removes the noise included in the video signal, with the filter intensity adjusted by the filter-intensity adjustment device 74. The synchronization circuit 73 separates or extracts the vertical synchronization pulse signal and the horizontal synchronization pulse signal from the video signal in which the noise is removed by the filter circuit 72, to thereby generate the vertical synchronization signal and the horizontal synchronization signal.

As described above, if the level of the noise included in the video signal is changed, the filter intensity of the filter circuit 72 is adjusted in accordance with the change. Specifically, if the noise included in the video signal increases, the synchronizing apparatus 70 increases the filter intensity in response to the increase of the noise. By this, it is possible to certainly remove the noise included in the video signal. Thus, it is possible to certainly perform the separating or extracting process of the vertical synchronization pulse signal and the horizontal synchronization pulse signal. On the other hand, if the noise included in the video signal decreases, the synchronizing apparatus 70 reduces the filter intensity in response to the decrease of the noise. By this, it is possible to certainly remove the noise included in the video signal, and it is also possible to perform the separating or extracting process of the vertical synchronization pulse signal and the horizontal synchronization pulse signal, highly accurately.

As explained above, according to the synchronizing apparatus 70, it is possible to perform the separating or extracting process of the vertical synchronization pulse signal and the horizontal synchronization pulse signal, certainly and highly accurately, in adaptation to the change of the noise level, by changing the filter intensity of the filter circuit 72 in accordance with the level change of the noise included in the video signal. By this, even if the level of the noise included in the video signal is changed, it is possible to always or almost always generate the synchronization signal, certainly and accurately, to thereby always or almost always ensure an accurate video image and good image quality

Incidentally, the filter-intensity-value setting circuit 71 is a specific example of the filter-intensity changing device, and the filter-intensity adjustment device 74 is a specific example of the filter-intensity adjusting device.

Moreover, the present invention can be also applied to an image-quality adjusting apparatus other than the above-mentioned

### examples.

Moreover, in the above-mentioned embodiments and each example of the image-quality adjusting apparatus of the present invention, such a case is exemplified that the noise included in the predetermined extraction section in the vertical blanking interval and the horizontal blanking interval of the video signal is extracted. However, the extraction location of the noise is not limited to this. For example, the noise may be extracted from only the horizontal blanking interval of the video signal.

Moreover, in the above-mentioned embodiments and each example of the image-quality adjusting apparatus of the present invention, such a case is exemplified that the substantial average value of the level of the noise included in the video signal which constitutes one frame or one field is generated. However, such construction may be adopted that the substantial average value of the level of noise included in a video signal which constitutes two frames or more is generated.

Moreover, the extraction of noise, the noise level detection, and the image-quality adjustment may be performed continuously for all the frames of the video signal, or may be performed for each two frames or more, for example. Alternatively, the image-quality adjustment may be performed only if the noise level is above or below a certain level. Alternatively, the image-quality adjustment may be performed only if the amount of change per unit time of the noise level is above a certain amount.

Furthermore, the image-quality adjusting apparatus of the present invention is not necessarily realized by an exclusive circuit provided for the display apparatus, and may be realized in another form. For example, it is also possible to make a computer function as the image-quality adjusting apparatus. In other words, it is possible to realize the image-quality adjusting apparatus by preparing a computer program to realize a noise-level detecting function, an adjustment-value changing function, and an image-quality adjusting function, by allowing the computer to read the computer program, and by using circuit resources mounted on the computer or circuit resources connected to the computer.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An image-quality adjusting apparatus (1, 20, 30, 40, 50, 60, 70) for adjusting image quality of a video image corresponding to a video signal by performing signal processing for the video signal, **characterized in that** said image-quality adjusting apparatus comprises:
a noise-level detecting device (3, 21, 31) for detecting a level of noise included in the video signal;
an adjustment-value changing device (4, 22, 32, 41, 51, 61, 71) for changing an image-quality adjustment value, in accordance with the noise level detected by said noise-level detecting device; and
an image-quality adjusting device (5, 23, 33, 42, 52, 62, 72) for adjusting the image quality of the video image, in accordance with the image-quality adjustment value changed by said adjustment-value changing device.

2. The image-quality adjusting apparatus (1, 20) according to claim 1, **characterized in that**
said adjustment-value changing device (4, 22) comprises a sharpness changing device (22) for changing a sharpness intensity value in accordance with the noise level detected by said noise-level detecting device, and
said image-quality adjusting device (5, 23) comprises a sharpness adjusting device (23) for adjusting sharpness of the video image, in accordance with the sharpness intensity value changed by said sharpness changing device.

3. The image-quality adjusting apparatus (1, 20) according to claim 2, **characterized in that**
said image-quality adjusting apparatus (1, 20) further comprises a noise extracting device (24A to 24E, 25A to 25E, 26A to 26E,) for extracting the noise included in the video signal, for each of a plurality of frequency bands,
said noise-level detecting device (3, 24A to 24E, 25A to 25E, 26A to 26E,) detects the level of the noise extracted by said noise extracting device, for each of the plurality of frequency bands,
said sharpness changing device (22) changes the sharpness intensity value in accordance with the noise level detected by said noise-level detecting device, for each of the plurality of frequency bands, and
said sharpness adjusting device (23) adjusts the sharpness of the video image, in accordance with the sharpness intensity value changed by said sharpness changing device; for each of the plurality of frequency bands.

4. The image-quality adjusting apparatus (1, 30) according to claim 1, **characterized in that**
said adjustment-value changing device (4, 32) comprises a contrast-ratio changing device (32) for changing a contrast ratio value in accordance with the noise level detected by said noise-level detecting device, and
said image-quality adjusting device (5, 33) comprises a contrast-ratio adjusting device (33) for adjusting a contrast ratio of the video image in accordance with the contrast ratio value changed by said contrast-ratio changing device.

5. The image quality adjusting apparatus (1, 40) according to claim 1, **characterized in that**
said adjustment-value changing device (4, 41) comprises a color-depth changing device for changing a color depth value in accordance with the noise level detected by said noise-level detecting device, and
said image-quality adjusting device (5, 42) comprises a color-depth adjusting device for adjusting a color depth of the video image in accordance with the color depth value changed by said color-depth changing device.

6. The image-quality adjusting apparatus (1, 50) according to claim 1, **characterized in that**
said adjustment-value changing (4, 51) device comprises a gamma-value changing device (51) for changing a gamma adjustment value in accordance with the noise level detected by said noise-level detecting device, and
said image-quality adjusting device (5, 52) comprises a gamma-value adjusting device (52) for adjusting a gamma value of the video image in accordance with the gamma adjustment value changed by said gamma-value changing device.

7. The image-quality adjusting apparatus (1, 60) according to claim 1, **characterized in that**
said adjustment-value changing device (4, 61) comprises a noise-reduction changing device (61) for changing a noise reduction intensity value in accordance with the noise level detected by said noise-level detecting device, and
said image-quality adjusting device (5, 62) comprises a noise-reduction processing device (62) for performing a noise reduction process for the video image in accordance with the noise reduction intensity value changed by said noise-reduction changing device.

8. The image-quality adjusting apparatus (1, 70) according to claim 1, **characterized in that**
said adjustment-value changing device (4, 71) comprises a filter-intensity changing device (71) for changing a filter intensity value in accordance with the noise level detected by said noise-level detecting device, and
said image-quality adjusting device (5, 72) comprises a filter-intensity adjusting device (72, 74) for adjusting intensity of a filter for extracting a synchronization signal included in the video image, in accordance with the filter intensity value changed by said filter-intensity changing device.

9. The image-quality adjusting apparatus (1, 20, 30, 40, 50, 60, 70) according to any one of claims 1 to 8, **characterized in that** said noise-level detecting device (3) detects noise included in a blanking interval of the video signal.

10. The image-quality adjusting apparatus (1, 20, 30, 40, 50, 60, 70) according to any one of claims 1 to 8, **characterized in that** said noise-level detecting device (3) comprises:
an extracting device (34) for extracting noise included in a predetermined section in a blanking interval of the video signal
a level detecting device (35) for detecting a level of the noise extracted by said extracting device; and
an average-value generating device (36) for generating an average value of the noise level included in the predetermined section detected by said level detecting device.

11. An image-quality adjusting method of adjusting image quality of a video image corresponding to a video signal by performing signal processing for the video signal, said image-quality adjusting method comprising:
a noise-level detecting process of detecting a level of noise included in the video signal;
an adjustment-value changing process of changing an image-quality adjustment value, in accordance with the noise level detected in said noise-level detecting process; and
an image-quality adjusting process of adjusting the image quality of the video image, in accordance with the image-quality adjustment value changed in said adjustment-value changing process.

12. A display apparatus (2) **characterized in that** said display apparatus comprises said image-quality adjusting apparatus according to any one of claims 1 to 10.

13. A computer program of instructions for tangibly embodying a program of instructions executable by a computer, **characterized in that** said computer program makes the computer function as said image-quality adjusting apparatus according to any one of claims 1 to 10.
